# EUROPÄISCHE PATENTANMELDUNG

(11) **EP 3 709 107 A1**
(43) Veröffentlichungstag der Anmeldung: **16.09.2020**
(21) Anmeldenummer: 19162810.6
(22) Anmeldetag: 14.03.2019
(51) Int. Cl.: G05B 19/042, G06F 21/64

(54) **VERFAHREN UND SYSTEM ZUR ÜBERWACHUNG DER INTEGRITÄT EINES AUTOMATISIERUNGSSYSTEMS**

(71) Anmelder: Siemens Aktiengesellschaft, 80333 München (DE)
(72) Erfinder: Blöcher, Uwe, 82178 Puchheim (DE); Falk, Rainer, 85586 Poing (DE); Feist, Christian Peter, 80689 München (DE); Pfau, Axel, 80333 München (DE); Sperl, Franz, 92526 Oberviechtach (DE); Trummer, Georg, 92224 Amberg (DE)

(57) **Zusammenfassung**

Die Erfindung betrifft ein Verfahren zur Überwachung der Integrität eines insbesondere industriellen cyber-physischen Systems (1), bei dem
- Messdaten, die mit verschiedenen Sensoren (3) des cyber-physischen Systems (1) erfasst wurden, und/oder Steuerdaten, die für verschiedene Aktuatoren (4) des cyber-physischen Systems (1) bestimmt sind, bereitgestellt und/oder abgegriffen werden (S1),
- wenigstens ein Messdaten-Zusammenhangsparameter zwischen den mit den verschiedenen Sensoren (3) erfassten Messdaten ermittelt wird, und/oder wenigstens ein Steuerdaten-Zusammenhangsparameter zwischen den für die verschiedenen Aktuatoren (4) bestimmten Steuerdaten ermittelt wird (S2),
- der wenigstens eine Messdaten-Zusammenhangsparameter mit einer Messdaten-Zusammenhangs-Referenz verglichen wird und/oder der wenigstens eine Steuerdaten-Zusammenhangsparameter mit einer Steuerdaten-Zusammenhangs-Referenz verglichen wird (S3), und
- basierend auf dem Vergleich die Integrität des zu überwachenden cyber-physischen Systems (1) beurteilt wird (S4).

Darüber hinaus betrifft die Erfindung ein Integritätsüberwachungs-System (13), ein Computerprogramm und ein computerlesbares Medium.

## Beschreibung

Die Erfindung betrifft ein Verfahren zur Überwachung der Integrität eines insbesondere industriellen cyber-physischen Systems. Darüber hinaus betrifft die Erfindung ein Integritätsüberwachungs-System, ein Computerprogramm und ein computerlesbares Medium.

Mit zunehmender Automatisierung erfolgt eine zunehmende Verbreitung von industriellen Steuerungs- und Automatisierungssystemen. Solche Systeme, die teilweise auch als cyber-physisches System (CPS) bezeichnet werden, kommen zum Beispiel bei der Fertigung von Maschinen oder Werkstücken zum Einsatz. Steuerungs- bzw. Automatisierungssysteme können prozesstechnische Anlagen implementieren. Industrielle Steuerungs- bzw. Automatisierungssysteme werden auch im Bereich Verkehrsüberwachung oder Verkehrssteuerung eingesetzt, beispielsweise im Zusammenhang mit Verkehrsleitsystemen in Städten, in der Gebäudeautomatisierung, beim Bahnverkehr oder im Flugverkehr. Sie können auch bei der Energieerzeugung, zum Beispiel in Kraftwerken oder Umspannwerken, sowie bei der Energieübertragung und Energieverteilung (Smart Grid) Verwendung finden.

Die Integrität von Systemen (englisch: Device Integrity, System Integrity), insbesondere von industriellen Steuerungs- bzw. Automatisierungssystemen und von deren Steuerungs- und Automatisierungsgeräten ist ein wichtiges Schutzziel. Es wird teilweise sogar als das wichtigste Schutzziel in industriellen Automatisierungs- und Steuerungssystemen betrachtet. Durch den Schutz der Integrität wird erreicht, dass ein System tatsächlich die erwartete Funktionalität realisiert.

Dazu werden Angriffe auf eine Maschine bzw. ein Automatisierungssystem, die diese manipulieren könnten (z.B. Firmware, Konfigurationsdaten, physikalische Manipulation), verhindert (Prevent).

Neben der Angriffs- bzw. Manipulationsvermeidung ist es auch sehr wichtig, eine eventuell trotz vorhandener Sicherheitsmaßnahmen erfolgte Manipulation erkennen zu können. Dazu dient eine Integritätsüberwachung einer Maschine beziehungsweise eines Automatisierungssystems zur Laufzeit. Hierfür werden Integritätsüberwachungsdaten im laufenden Betrieb erfasst und anhand von Integritäts-Referenzdaten überprüft.

Aus dem allgemeinen IT-Bereich sind sogenannte Intrusion Detection Systeme (IDS) bekannt, mittels derer Angriffe auf IT-Systeme erkannt werden können. Es kann sich sowohl um Hostbasierte als auch Netzwerk-basierte Intrusion Detection Systeme handeln. Dabei werden Informationen eines IT-Systems überwacht. Die Ausprägung solcher Systeme ist nach dem Kenntnisstand der Anmelderin meist Regel-basiert. Aus dem Artikel "Application of Neural Networks to Intrusion Detection" von Jean-Philippe Planquart, SANS Institute 2001, https://www.sans.org/readingroom/whitepapers/detection/applicationneural-networksintrusion-detection-336 sind auch Ansätze unter Verwendung von Methoden des maschinellen Lernens bekannt.

Aus der ebenfalls auf die Anmelderin zurückgehenden DE 10 2016 208 284 A1 geht ein Verfahren zum Verbessern einer Geräteauthentifizierung mit Hilfe von Geräteüberwachungsdaten hervor. Dabei werden als Geräteüberwachungsdaten Informationen oder Nachweise eines Gerätes oder über ein Gerät in einem Backendsystem bereitgestellt. Es wird eine Einschätzung einer Vertrauenswürdigkeit des Gerätes anhand der Geräteüberwachungsdaten und mittels einer konfigurierbaren Validierungsvorschrift während eines Betriebes des Gerätes durchgeführt. Eine kryptographische kommunikationsbasierte Authentifizierung des Gerätes wird ergänzt durch mindestens eine im Betrieb des Gerätes stattfindende erweiterte Validierung auf Grundlage der Einschätzung der Vertrauenswürdigkeit des Gerätes. Es wird somit eine erweiterte Geräteauthentifizierung ermöglicht, welche neben einer Authentisierung beispielsweise in einer initialen Phase eines Kommunikationsverbindungsaufbaus auch in der späteren Betriebsphase eines Gerätes die anhaltende Vertrauenswürdigkeit des Gerätes prüft. Die Geräteüberwachungsdaten können Sensormesswerte umfassen. Anhand von Sensormessungen kann die Plausibilität von Messwerten, die ein Feldgerät über interne oder angeschlossene Sensoren empfängt, überprüft werden. Anhand des Abgleichs mit der Validierungsvorschrift wird das Gerät insbesondere auf eine erwartete und intakte Funktionsweise hin überprüft und bei erfolgreicher Validierung die Vertrauenswürdigkeit festgestellt.

Aus der ebenfalls auf die Anmelderin zurückgehenden EP 3 428 756 A1 gehen ein Verfahren und ein System zur Integritätsüberwachung eines Automatisierungssystems hervor. Dabei wird ein Vergleich von Zustandsdaten des Automatisierungssystems und Sensordaten, welche eine Umweltbeeinflussung des Automatisierungssystems beschreiben, durchgeführt und auf Basis des Vergleichs die Integrität überwacht, um Beeinträchtigungen dieses aufgrund von Fremdzugriffen festzustellen. Dabei können je nach Art der Umweltbeeinflussung unterschiedlichste Sensoren zum Einsatz kommen. Beispielsweise kann die Umweltbeeinflussung eine Erwärmung oder Abkühlung der Umgebung des Automatisierungssystems umfassen. In einem solchen Fall ist es möglich, dass Temperatursensoren verwendet werden. In anderen Beispielen kann die Umweltbeeinflussung das Schalten von Ampeln oder Verkehrsführungssystemen umfassen. Dann können Videodaten, welche die Verkehrsführungssysteme abbilden, als Sensordaten erhalten werden. Im Zusammenhang mit der Energieerzeugung können beispielsweise auch Sensordaten erhalten werden, die indikativ für elektrische Kenngrößen sind, etwa Spannung oder Stromfluss oder Phasenverschiebung.

Aus der US 2016/0234241 A1 gehen ein Risiko-Management-Verfahren und -System hervor. Offenbart ist, dass mit einem industriellen Prozess-Steuerungs- und Automatisierungssystem assoziierte Risikodaten gesammelt und analysiert werden, um potenzielle Sicherheitsprobleme zu finden.

Die US 2016/0234243 A1 offenbart ein Risiko-Management-System und ein Verfahren, bei dem eine Infrastruktur-Überwachungs-Software verwendet wird, um Cyber-Security-Risikodaten von Geräten eines industriellen Automatisierungssystem zu sammeln.

Weiterhin ist bekannt, eine physikalische Größe redundant durch mehrere Sensoren (beispielsweise zwei oder drei) zu erfassen. Dies hat den Vorteil, dass auch bei Ausfall eines Sensors ein Messwert verfügbar ist. Dabei ist auch bekannt, die Messwerte zu plausibilisieren bzw. auf Übereinstimmung zu prüfen.

Aus der Publikation "Optimal redundant sensor configuration for accuracy increasing in space inertial navigation system", Mehdi Jafari, Aerospace Science and Technology, Volume 47, December 2015, Seiten 467-472, Elsevier, ScienceDirect geht ferner hervor, dass die Messgenauigkeit durch Verwendung mehrerer Sensoren erhöht werden kann.

Allgemein bekannt ist ferner, dass zwischen Signalen eine Ähnlichkeit beziehungsweise Abhängigkeit bestehen kann (siehe beispielsweise https://en.wikipedia.org/wiki/Correlation_and_dependence).

Insbesondere aus dem Bereich der Signalverarbeitung ist eine Kreuzkorrelation bekannt (siehe beispielsweise https://en.wikipedia.org/wiki/Cross-correlation (bzw. Kovarianz in der Statistik). Diese ist ein Maß für die Ähnlichkeit zwischen zwei Signalen. Bei mehr als zwei Signalen kann die jeweilige Kreuzkorrelation zwischen zwei Signalen als Matrix dargestellt werden (Kreuzkorrelationsmatrix beziehungsweise Kovarianzmatrix, siehe beispielsweise https://en.wikipedia.org/wiki/Covariance_matrix). Es sind spezielle Korrelationskoeffizienten als Ähnlichkeitsmaß bekannt, z.B. der Pearson-Korrelationskoeffizient (siehe beispielsweise https://en.wikipedia.org/wiki/Pearson_correlation_coefficient ). Ein weiteres Ähnlichkeitsmaß ist die Schätzung der Transinformation I(X;Y) (mutual information) zwischen zwei Signalquellen X, Y (gemäß der Informationstheorie / theoretische Nachrichtentechnik, siehe beispielsweise https://de.wikipedia.org/wiki/Transinformation, sowie https://en.wikipedia.org/wiki/Mutual_information).

Es besteht der Bedarf an einem verbesserten Schutz der Integrität von cyber-physischen Systemen. Dabei besteht insbesondere ein Bedarf, den korrekten, integren Betrieb der physikalischen Ebene zu überwachen, das heißt, der Sensor-Messwerte und Aktuator-Steuersignale.

Ausgehend davon ist es eine Aufgabe der vorliegenden Erfindung, ein Verfahren zur Überwachung der Integrität eines insbesondere industriellen cyber-physischen Systems, etwa Automatisierungssystems anzugeben, das ein besonders hohes Maß an Schutz bietet und sich gleichzeitig mit vertretbarem Aufwand durchführen lässt. Darüber hinaus ist es eine Aufgabe der vorliegenden Erfindung, ein System zur Durchführung eines solchen Verfahrens anzugeben.

Die erstgenannte Aufgabe wird gelöst durch ein Verfahren zur Überwachung der Integrität eines insbesondere industriellen cyber-physischen Systems,
bei dem
- Messdaten, die mit verschiedenen Sensoren des cyber-physischen Systems erfasst wurden, und/oder Steuerdaten, die für verschiedene Aktuatoren des cyber-physischen Systems bestimmt sind, bereitgestellt und/oder abgegriffen werden,
- wenigstens ein Messdaten-Zusammenhangsparameter zwischen den mit den verschiedenen Sensoren erfassten Messdaten ermittelt wird, und/oder wenigstens ein Steuerdaten-Zusammenhangsparameter zwischen den für die verschiedenen Aktuatoren bestimmten Steuerdaten ermittelt wird,
- der wenigstens eine Messdaten-Zusammenhangsparameter mit wenigstens einer Messdaten-Zusammenhangs-Referenz verglichen wird und/oder der wenigstens eine Steuerdaten-Zusammenhangsparameter mit wenigstens einer Steuerdaten-Zusammenhangs-Referenz verglichen wird, und
- basierend auf dem Vergleich die Integrität des zu überwachenden cyber-physischen Systems beurteilt wird.

Die zweitgenannte Aufgabe wird gelöst durch ein Integritätsüberwachungs-System zur Durchführung des erfindungsgemäßen Verfahrens zur Überwachung, das bevorzugt dazu ausgebildet und/oder eingerichtet
- Messdaten, die mit verschiedenen Sensoren eines zu überwachenden cyber-physischen Systems erfasst wurden, und/oder Steuerdaten, die für verschiedene Aktuatoren eines zu überwachenden cyber-physischen Systems bestimmt sind, zu erfassen und/oder übergeben zu bekommen,
- wenigstens einen Messdaten-Zusammenhangsparameter zwischen den mit den verschiedenen Sensoren erfassten Messdaten zu ermitteln, und/oder wenigstens einen Steuerdaten-Zusammenhangsparameter zwischen den für die verschiedenen Aktuatoren bestimmten Steuerdaten zu ermitteln,
- den wenigstens einen Messdaten-Zusammenhangsparameter mit einer Messdaten-Zusammenhangs-Referenz zu vergleichen und/oder den wenigstens einen Steuerdaten-Zusammenhangsparameter mit einer Steuerdaten-Zusammenhangs-Referenz zu vergleichen.

Der vorliegenden Erfindung liegt mit anderen Worten die Idee zugrunde, ein insbesondere industrielles cyber-physisches System (CPS) - beispielsweise ein industrielles Automatisierungssystem - als Signalverarbeitungssystem im Sinne der Nachrichtentechnik zu interpretieren bzw. zu behandeln. Dazu wird insbesondere im laufenden Betrieb wenigstens ein Zusammenhangsparameter zwischen Signalen, konkret Sensor- und/oder Aktuatordaten bzw. -werten verschiedener Sensoren bzw. Aktuatoren des CPS praktisch als ein "Fingerabdruck" des CPS ermittelt und (jeweils) mit einer (zugehörigen) Referenz verglichen. Zweckmäßiger Weise erfolgt der Vergleich, um zu ermitteln, ob eine Abweichung von der (jeweiligen) Referenz bzw. dem (jeweiligen) Referenzwert - gegebenenfalls um mehr als ein zulässiges Maß - vorliegt oder nicht. Es ist möglich, im Falle einer Abweichung des Fingerprints von einer Referenz insbesondere um mehr als ein zulässiges Maß davon auszugehen, dass eine Manipulation des CPS vorliegt bzw. vorlag.

Die erfindungsgemäße Überwachung lässt sich mit geringem Aufwand durchführen, insbesondere unter Nutzung von Daten bzw. Werten, die ohnehin in einem zu überwachenden cyber-physischen Systeme vorhanden sind, nämlich unter Nutzung der physikalischen Sensor und/oder Aktuatordaten bzw. -werte eines solchen. Dabei kann gleichzeitig eine sehr zuverlässige Integritätsüberwachung erzielt werden.

Das erfindungsgemäße Verfahren lässt sich auf besonders einfache Weise auch für bereits bestehende cyber-physische Systeme durchführen bzw. es lässt sich ein erfindungsgemäßes Integritäts-Überwachungssystem auf besonders einfache Weise auch für bereits bestehende cyber-physische Systeme nachrüsten.

Aus der ebenfalls auf die Anmelderin zurückgehenden Europäischen Patentanmeldung 18208144.8 ist ein Erweiterungsgerät für ein Automatisierungsgerät bekannt, dass zur Verwendung mit dem erfindungsgemäßen Verfahren, insbesondere in Verbindung mit neuronalen Netzwerken, geeignet ist.

Für den Fall, dass sowohl Messdaten, die mit verschiedenen Sensoren des cyber-physischen Systems erfasst wurden, als auch Steuerdaten, die für verschiedene Aktuatoren des cyber-physischen Systems bestimmt sind, bereitgestellt und/oder abgegriffen werden, ist es auch möglich, dass wenigstens ein Mess-Steuerdaten-Zusammenhangsparameter zwischen den mit den verschiedenen Sensoren (erfassten Messdaten und den für verschiedene Aktuatoren bestimmten Steuerdaten ermittelt wird, und der wenigstens eine ermittelten Mess-Steuerdaten-Zusammenhangsparameter mit einer Mess-Steuerdaten-Referenz verglichen wird, und bevorzugt basierend auf dem Vergleich die Integrität des zu überwachenden cyber-physischen Systems beurteilt wird.

Mit anderen Worten kann ein Zusammenhangsparameter nicht nur zwischen den Messdaten verschiedener Sensoren einerseits und/oder zwischen den Steuerdaten verschiedener Aktuatoren andererseits ermittelt werden, sondern auch wenigstens ein Zusammenhangsparameter zwischen Messdaten und Steuerdaten.

Das erfindungsgemäße Integritäts-Überwachungssystem kann in vorteilhafter Ausgestaltung entsprechend ausgebildet und/oder eingerichtet sein.

Die Bestimmung des wenigstens einen (Messdaten- und/oder Steuerdaten-)Zusammenhangsparameters und der Vergleich dieses mit der Referenz kann unter Verwendung eines entsprechend ausgestalteten, erfindungsgemäßen Computerprogramms erfolgen. Ein solches kann beispielsweise auf wenigstens einem - ggf. ohnehin bereits vorhandenen - (Industrie-)PC und/oder wenigstens einer - ggf. ohnehin bereits vorhandenen - Steuerung bereitgestellt werden.

Der oder die Zusammenhangsparameter, der erfindungsgemäß bestimmt wird bzw. die erfindungsgemäß bestimmt werden und der oder die auch als Ähnlichkeitsparameter aufgefasst bzw. bezeichnet werden können, gibt bzw. geben an, in welchem Maß ein Zusammenhang bzw. eine Ähnlichkeit zwischen Signalen des überwachten Systems besteht. Solche Zusammenhangs- bzw. Ähnlichkeitsparameter (auch als Zusammenhangs- bzw. Ähnlichkeitsmaße bezeichnet) sind aus dem Stand der Technik aus dem Bereich der Nachrichtentechnik vorbekannt. Rein beispielhaft für Zusammenhangs-/Ähnlichkeitsparameter (Zusammenhangs/Ähnlichkeitsmaße), die erfindungsgemäß zwischen physikalischen Sensor- und/oder Aktuatordaten eines CPS zum Zwecke der Integritätsprüfung ermittelt werden können bzw. werden, seien genannt: Korrelationskoeffizienten, insbesondere Kreuz-Korrelationskoeffizienten und/oder Pearson-Korrelationskoeffizienten, und/oder Korrelationsmatrizen und/oder Transinformationen. Das erfindungsgemäße Integritätsüberwachungs-System ist in bevorzugter Weiterbildung entsprechend dazu ausgebildet und/oder eingerichtet, wenigstens einen Korrelationskoeffizient, insbesondere wenigstens einen Kreuz-Korrelationskoeffizient und/oder wenigstens einen Pearson-Korrelationskoeffizient, und/oder wenigstens eine Korrelationsmatrix und/oder wenigstens eine Transinformation als den wenigstens einen Messdaten-Zusammenhangsparameter und/oder als den wenigstens einen Steuerdaten-Zusammenhangsparameter zu ermitteln.

Für die Ermittlung kann bzw. können der oder die Zusammenhangsparameter beispielsweise unter Rückgriff auf geeignete Formeln berechnet werden. Solche können diversen Fachbüchern sowie beispielsweise den Wikipedia-Artikeln "Cross correlation", "Covariance matrix, "Pearson correlation coefficient", "Transinformation", "Mutual information" (siehe https://en.wikipedia.org/wiki/Cross-correlation, https://en.wikipedia.org/wiki/Covariance_matrix, https://en.wikipedia.org/wiki/Pearson_correlation_coefficient, https://de.wikipedia.org/wiki/Transinformation, https://en.wikipedia.org/wiki/Mutual_information) entnommen werden.

Alternativ oder zusätzlich zu einer Berechnung ist auch ein Schätzen des bzw. der Messdaten- und/oder Steuerdaten-Zusammenhangsparameter möglich. Auch hierzu kann auf Methoden zurückgegriffen werden, die aus dem Stand der Technik vorbekannt sind. Dazu kann beispielsweise eine Datendivergenz-Ermittlung (data differencing), eine Entropieschätzung (entropy estimation) erfolgen oder eine Kullback-Leibler-Divergenz ermittelt werden, die beispielsweise in diversen Fachbüchern und in den Wikipedia-Artikeln https://en.wikipedia.org/wiki/Data_differencing, https://en.wikipedia.org/wiki/Entropy_estimation und https://de.wikipedia.org/wiki/Kullback-Leibler-Divergenz beschrieben sind.

Insbesondere zur Berechnung und/oder Schätzung wenigstens eines Messdaten- und/oder Steuerdaten-Zusammenhangsparameters kann auch auf künstliche Intelligenz zurückgegriffen werden. Dazu kann beispielsweise ein neuronales Netzwerk verwendet werden, um wenigstens einen ein Zusammenhangs- bzw. Ähnlichkeitsparameter bzw. wenigstens ein Zusammenhangs- bzw. Ähnlichkeitsmaß zu ermitteln. Das neuronale Netzwerk kann dazu mit Referenzdaten angelernt werden. Die Ausgabe des neuronalen Netzwerks auf die ermittelten Sensor- und/oder Aktuatordaten kann als wenigstens ein Zusammenhangs- bzw. Ähnlichkeitsparameter bzw. Zusammenhangs- bzw. Ähnlichkeitsmaß verwendet werden.

Unter einem cyber-physischen System ist insbesondere ein Verbund informatischer/softwaretechnischer Komponenten mit mechanischen und elektronischen Teilen zu verstehen. Ein zu überwachendes, insbesondere industrielles cyber-physisches System kann beispielsweise eine beliebige Art von Automatisierungssystem, ein Kraftwerk, ein Energieverteilnetz, ein Umspannwerk, eine Fertigungslinie für Werkstücke oder Maschinen, eine Raffinerie, eine Pipeline, eine Kläranlage, ein Verkehrsleitsystem, ein medizinisches Gerät o. ä. implementieren. Beispiele für cyber-physische Systeme in Form von Automatisierungssysteme umfassen auch: eine Industrieanlage; eine Fertigungshalle; ein Umspannwerk; ein Roboter; ein Flurförderfahrzeug; ein autonomes Transportsystem; eine Werkzeugmaschine; eine Fräse; eine Presse; eine prozesstechnische Anlage; und einen 3D-Drucker.

Eine Steuerung kann beispielsweise durch eine speicherprogrammierbare Steuerung (SPS) oder auch eine Steuerungs- und Überwachungseinrichtung, etwa in Form eines SCADA-Systems gegeben sein. SCADA steht dabei für Supervisory Control and Data Acquisition.

Das erfindungsgemäße Integritätsüberwachungs-System kann in bevorzugter Weiterbildung ausgebildet und/oder eigerichtet sein, basierend auf dem Vergleich des wenigstens einen Messdaten-Zusammenhangsparameters mit der Messdaten-Zusammenhangs-Referenz und/oder des wenigstens einen Steuerdaten-Zusammenhangsparameters mit der Steuerdaten-Zusammenhangs-Referenz die Integrität des zu überwachenden cyber-physischen Systems zu beurteilen.

Alternativ oder zusätzlich kann es eine Recheneinrichtung, etwa einen (Industrie-)PC umfassen oder durch eine Recheneinrichtung gegeben sein, auf der bevorzugt eine geeignete Software installiert ist. Das erfindungsgemäße Integritätsüberwachungs-System umfasst besonders bevorzugt wenigstens einen Prozessor und/oder wenigstens einen Programmspeicher, der bzw. die eingerichtet ist bzw. sind, um die vorstehenden Schritte auszuführen. Das erfindungsgemäße System kann eine Zusammenhangs-Ermittlungs-Einheit umfassen, die ausgebildet und/oder eingerichtet ist, um wenigstens einen Zusammenhangsparameter zwischen Sensor- und/oder Aktuatordaten bzw. - werten zu ermitteln. Dazu kann beispielsweise ein Analogrechner, ein digitaler Signalprozessor, ein FPGA-Baustein (Field-Programmable Gate Array), ein ASIC (Application Specific Integrated Circuit), ein Grafikprozessor GPU (Graphics Processing Unit), ein Artificial-Intelligence-Hardware-Beschleunigerbaustein, z.B. eine Tensor Processing Unit, und/oder ein Vektor-Prozessor (array processor) verwendet werden.

Es kann ferner alternativ oder zusätzlich eine Datenerfassungseinheit aufweisen, die ausgebildet und/oder eingerichtet ist, um die Sensordaten und/oder Steuerdaten zu empfangen und/oder abzugreifen. Ist eine solche Einheit vorhanden, weist sie bevorzugt wenigstens eine Kommunikationsschnittstelle auf, über welche sie mit wenigstens einer Komponente, beispielsweise Steuerung eines zu überwachenden cyber-physischen Systems kommunikativ verbunden werden kann, um von dieser Sensor- und/oder Steuerdaten übergeben zu bekommen und/ oder abzugreifen. In einer Variante können Sensor- und/oder Steuerdaten rückwirkungsfrei abgegriffen werden, z.B. unter Nutzung wenigstens einer Datendiode oder wenigstens einer sogenannten Data Capturing Unit (DCU). Dies hat den Vorteil, dass das cyber-physische System, etwa Automatisierungssystem durch das erfindungsgemäße Integritätsüberwachungs-System nicht beeinflusst werden kann.

Das erfindungsgemäße Integritätsüberwachungs-System kann darüber hinaus eine Zusammenhangs-Ermittlungs-Einheit aufweisen, die dazu ausgebildet und/oder eingerichtet ist, den wenigstens einen Messdaten-Zusammenhangsparameter und/oder den wenigstens einen Steuerdaten-Zusammenhangsparameter zu ermitteln, insbesondere zu berechnen und/oder zu schätzen.

Auch kann eine Vergleichseinheit vorgesehen sein, die dazu ausgebildet und/oder eingerichtet ist, den wenigstens einen Messdaten-Zusammenhangsparameter mit der Messdaten-Zusammenhangs-Referenz zu vergleichen, und/oder, um den wenigstens einen Steuerdaten-Zusammenhangsparameter mit der Steuerdaten-Zusammenhangs-Referenz zu vergleichen.

Die eine oder die mehreren Einheiten, die das erfindungsgemäße System in vorteilhafter Ausbildung umfasst, stellen insbesondere funktionale Einheiten dar, die beispielsweise durch verschiedene Software-Komponenten auch auf einer gemeinsamen Hardware implementiert sein können.

Das erfindungsgemäße Verfahren kann vor Ort (lokal) für ein zu überwachendes cyber-physisches System durchgeführt werden.

Alternativ oder zusätzlich kann im Rahmen dieses auch eine (herkömmliche oder Edge-)Cloud genutzt werden. Die erfindungsgemäße Integritäts-Überwachung kann auch als Dienst in einer Cloud angeboten bzw. in einer Cloud durchgeführt werden. Insbesondere zumindest die Ermittlung des wenigstens einen (Messdaten- und/oder Steuerdaten-)Zusammenhangsparameters und/oder der Vergleich dieses mit einem Referenz-(Messdaten- und/oder Steuerdaten-)Zusammenhangsparameter können als Dienst in einer Cloud angeboten bzw. in einer Cloud durchgeführt werden. Dies ist besonders vorteilhaft, wenn auch wenigstens eine Komponente eines zu überwachenden cyber-physischen Systems, etwa wenigstens ein Roboter und/oder wenigstens eine Fertigungsmaschine ebenfalls aus der Cloud angesteuert werden (Cloud-Robotics). Eine Cloud bietet auch den Vorteil, dass Betriebsdaten anderen im Rahmen eines über die Cloud angebotenen Services, insbesondere einem Integritätsüberwachungs-Service, einfach zur Verfügung gestellt werden können.

Ein erfindungsgemäßes Integritäts-Überwachungssystem kann auch als ein virtuelles System, insbesondere in einer Cloud, bzw. durch einen IoT-Service bzw. eine Cloud-App realisiert sein.

Wird eine Cloud genutzt, können auch besonders einfach die Zusammenhangsparameter, insbesondere Fingerabdrücke verschiedener cyber-physischer Systeme miteinander verglichen werden.

Vor Ort kann ein erfindungsgemäßes Integritäts-Überwachungssystem beispielsweise innerhalb eines Steuernetzwerkes (etwa einer Automatisierungszelle) vorgesehen sein, um die Sensor- und/oder Aktuatordaten einer oder mehrerer Komponenten des Steuernetzwerkes zu erfassen und zu prüfen. Alternativ oder zusätzlich kann ein solches auch übergeordnet, beispielsweise in einem Anlagen- bzw. Fabriknetzwerk, vorgesehen sein. Insbesondere in diesem Fall kann es Daten von mehreren Steuernetzwerken (insbesondere Automatisierungszellen) oder von mehreren Maschinen erfassen und auf Übereinstimmung prüfen. Dazu können auch Daten eines SCADA-Systems und/oder eines Log-Servers und/oder eines Historian-Servers ausgelesen werden.

Die Beurteilung der Integrität des zu überwachenden cyber-physischen Systems schließt bevorzugt die Beurteilung ein, ob sich zumindest ein Teil des zu überwachenden cyber-physischen Systems in einem manipulierten Zustand befindet. Für den Fall, dass ein manipulierter Zustand erkannt wird, wird bevorzugt ein Alarm ausgegeben und/oder das cyber-physische System in einen sicheren Zustand überführt. Das erfindungsgemäße Integritätsüberwachungs-System ist in bevorzugter Weiterbildung entsprechend ausgebildet und/oder eingerichtet.

Beispielsweise kann vorgesehen sein, dass ein Alarm ausgegeben und/oder das überwachte cyber-physische System in einen sicheren Zustand überführt wird, wenn wenigstens ein ermittelter Messdaten- und/oder wenigstens ein ermittelter Steuerdaten-Zusammenhangsparameter insbesondere um mehr als ein vorgegebenes Maß von der Messdaten- bzw. Steuerdaten-Zusammenhangs-Referenz abweicht. Alternativ oder zusätzlich kann vorgesehen sein, dass dies geschieht, wenn eine Abweichung über mehr als einen vorgegebenen (Grenz-)Zeitraum anhält. Auch kann beobachtet werden, wie sich einer oder mehrere Zusammenhangsparameter, die insbesondere im laufenden Betrieb wiederholt ermittelt werden, über die Zeit verhalten und für den Fall, dass sich ein Zusammenhang bzw. eine Ähnlichkeit signifikant ändert, Maßnahmen eingeleitet werden. Das Verhalten über die Zeit bzw. eine Änderung kann beispielsweise dadurch beobachtet werden, dass ein (Messdaten- und/oder Steuerdaten-)Zusammenhangsparameter jeweils mit einem (Messdaten- und/oder Steuerdaten-)Zusammenhangsparameter verglichen wird, der zuvor ermittelt wurde und dann insbesondere die (jeweilige) Referenz darstellt.

In vorteilhafter Ausführung kann eine Alarmschwelle konfiguriert werden bzw. wird eine Alarmschwelle konfiguriert, das heißt wie empfindlich die Überwachung ist.

Auch ist es möglich, dass für den Fall, dass ein manipulierter Zustand erkannt wird, die Konfiguration des überwachten cyber-physischen Systems geändert wird, insbesondere derart, dass wenigstens eine Komponente dieses, die als manipuliert gilt, deaktiviert wird. Beispielsweise können einer oder mehrere Sensoren und/oder Aktuatoren, die nicht plausibel sind und daher als manipuliert gelten, deaktiviert werden. Diese Ausführungsform bietet den Vorteil, dass mehrere redundante Komponenten, insbesondere Sensoren und/oder Aktuatoren in einem cyber-physischen System vorgesehen werden können. Es werden dann im laufenden Betrieb diejenigen deaktiviert, die nicht (mehr) plausibel sind. Insbesondere wenn unterschiedliche technische Realisierungen von Komponenten, etwa Sensoren und/oder Aktuatoren (z.B. unterschiedliche Betriebssysteme, unterschiedliche Bibliotheken, unterschiedliche Hardware-Basis, etc.) verwendet werden, kann dadurch die Angriffshürde, um ein cyber-physisches System, beispielsweise Automatisierungssystem erfolgreich zu manipulieren, weiter erhöht werden.

Bevorzugt wird der wenigstens eine Messdaten-Zusammenhangsparameter und/oder der wenigstens eine Steuerdaten-Zusammenhangsparameter im laufenden Betrieb des cyber-physischen Systems ermittelt. Alternativ oder zusätzlich ist es auch möglich, dass zurückliegende Sensor- und/oder Aktuatordaten beispielsweise von einem Historian-Server abgefragt werden. So kann beispielsweise nachträglich, d.h. nach erfolgter Produktion, die Integrität eines Produktionsvorgangs mittels aufgezeichneter Daten geprüft werden.

Weiterhin kann vorgesehen sein, dass der wenigstens eine Messdaten-Zusammenhangsparameter und/oder der wenigstens eine Steuerdaten-Zusammenhangsparameter wiederholt ermittelt und bevorzugt mit der (jeweiligen) Referenz vergliche wird. Beispielsweise kann wenigstens ein Zusammenhangsparameter jede Sekunde, jede Minute oder auch jede Stunde ermittelt werden, bevorzugt für Daten aus einem jeweils zurückliegenden Zeitfenster.

Es kann einer bzw. können mehrere Zusammenhangsparameter über unterschiedliche Zeitfenster verschiedener Länge (beispielsweise eine Sekunde, eine Minute, eine Stunde) ermittelt und geprüft werden. Die Zeitfenster können vorzugsweise so gebildet werden, dass ein Zeitfenster einem Fertigungsschritt oder einem Produktionsauftrag (Batch) entspricht. In dieser Variante kann bevorzugt eine Referenzinformation abhängig von dem jeweiligen Fertigungsschritt bzw. Produktionsauftrag ausgewählt werden. Die Information zu dem Start- und Endzeitpunkt eines Fertigungsschritts oder eines Batches kann beispielsweise auf einem Produktionsplanungssystem oder aus einem Steuerungssystem ausgelesen werden.

Eine weitere besonders bevorzugte Ausführungsform der Erfindung zeichnet sich dadurch aus, dass Messdatensequenzen, die mit verschiedenen Sensoren des cyber-physischen Systems erfasst wurden, wobei jede Messdatensequenz Messdaten, die mit einem der Sensoren zu zeitlich aufeinanderfolgenden Messzeitpunkten erfasst wurden, umfasst, bereitgestellt und/oder abgegriffen werden. Dann wird bevorzugt wenigstens ein Zusammenhangsparameter zwischen den Messdatensequenzen der verschiedenen Sensoren als der wenigstens eine Messdaten-Zusammenhangsparameter ermittelt und zweckmäßiger Weise mit der Messdaten-Zusammenhangs-Referenz verglichen. Alternativ oder zusätzlich kann vorgesehen sein, dass Steuerdatensequenzen, die für verschiedene Aktuatoren des cyber-physischen Systems bestimmt sind, wobei jede Steuerdatensequenz Steuerdaten, die einem der Aktuatoren zu zeitlich aufeinanderfolgenden Steuerzeitpunkten bereitgestellt wurden, umfasst, bereitgestellt und/oder abgegriffen werden. Dann wird bevorzugt wenigstens ein Zusammenhangsparameter zwischen den Steuerdatensequenzen der verschiedenen Aktuatoren als der wenigstens eine Steuerdaten-Zusammenhangsparameter ermittelt und zweckmäßiger Weise mit der Steuerdaten-Zusammenhangs-Referenz verglichen.

Das erfindungsgemäße Integritäts-Überwachungssystem ist in vorteilhafter Weiterbildung entsprechend ausgebildet und/oder eingerichtet.

Werden sowohl Mess- als auch Steuerdatensequenzen bereitgestellt und/oder abgegriffen, kann auch wenigstens ein Zusammenhangsparameter zwischen Messdatensequenzen und Steuerdatensequenzen als wenigstens ein Mess-Steuerdaten-Zusammenhangsparameter ermittelt werden.

Die mehreren Messzeitpunkte, zu denen die Daten einer Sequenz erfasst bzw. bereitgestellt werden bzw. wurden, können zeitlich äquidistant beabstandet sein.

Daten- bzw. Signalsequenzen verschiedener Sensoren und/oder verschiedener Aktuatoren können besonders vorteilhaft auf einen Zusammenhang bzw. eine Ähnlichkeit hin untersucht werden und eine Abweichung des Zusammenhangs bzw. der Ähnlichkeit der Sequenz(en) von einer Referenz kann besonders zuverlässig Aufschluss auf eine mögliche Integritätsverletzung liefern. Dies hat den Vorteil, dass der zeitliche Verlauf des Zusammenhangs bzw. der Ähnlichkeit der Sensorwerte bzw. Steuersignale ermittelt und auf Übereinstimmung mit einer Referenzinformation geprüft werden kann. Hierbei wird also geprüft, ob der zeitliche Verlauf des Ähnlichkeitsmaßes die erwartete Verlaufsform aufweist bzw. hinreichend gut mit ihr übereinstimmt.

Hinsichtlich der Messdatensequenzen gilt bevorzugt, dass diese als Teil einer Sequenz von Prozessabbildern wenigstens einer Steuerung des cyber-physischen Systems bereitgestellt und/oder abgegriffen werden können.

In analoger Weise kann hinsichtlich der Steuerdaten gelten, dass diese als Teil einer Sequenz von Prozessabbildern wenigstens einer Steuerung des cyber-physischen Systems bereitgestellt und/oder abgegriffen werden.

Das erfindungsgemäße Integritäts-Überwachungssystem ist bevorzugt entsprechend ausgebildet und/oder eingerichtet.

Sequenzen bzw. Folgen von Prozessabbildern stellen eine besonders geeignete Quelle für Messdaten und/oder Steuerdaten dar, die auf die erfindungsgemäße Weise zur Beurteilung der Integrität eines cyber-physischen Systems herangezogen werden.

Das bzw. die Zeitfenster, in dem bzw. denen die Daten einer jeweiligen Sequenz liegen, kann bzw. können in ihrer Länge verschieden sein. Es können beispielsweise Sequenzen herangezogen werden, deren Daten sich über ein Zeitfenster von einer Sekunde, einer Minute oder auch einer Stunde verteilen. Die Sequenzen können überlappungsfrei sein, ebenso aber überlappend gebildet werden. Insbesondere kann ein Zeitfenster als ein Schiebefenster (sliding window) gebildet werden, z.B. sekündlich jeweils für die zurückliegenden 5 oder 10 oder 60 Sekunden.

Es kann weiterhin sein, dass nur eine Gruppe, die zwei oder mehr Sensoren umfasst, und/oder nur eine Gruppe, die zwei oder mehr Aktuatoren umfasst, betrachtet wird, insbesondere die Signale bzw. Daten nur einer Gruppe von Sensoren und/oder nur einer Gruppe von Aktuatoren bereitgestellt und/oder abgegriffen und für diese (jeweils) wenigstens ein Zusammenhangsparameter ermittelt und auf die erfindungsgemäße Weise für die Integritätsprüfung herangezogen wird. Alternativ dazu ist es selbstverständlich auch möglich, mehrere Gruppen mit jeweils zwei Sensoren bzw. Aktoren zu betrachten.

Eine weitere bevorzugte Ausführungsform zeichnet sich entsprechend dadurch aus, dass für mehrere Gruppen mit jeweils wenigstens zwei Sensoren des cyber-physischen Systems jeweils ein Messdaten-Zusammenhangsparameter ermittelt wird, und der Messdaten-Zusammenhangsparameter jeder Gruppe jeweils mit der Messdaten-Zusammenhangs-Referenz verglichen wird, wobei jeweils die Abweichung von der Messdaten-Zusammenhangs-Referenz bestimmt wird. Dann ist bevorzugt vorgesehen, dass die Integrität des zu überwachenden cyber-physischen Systems basierend auf dem arithmetischen und/oder geometrischen Mittelwert der Abweichungen mehrerer Gruppen von Sensoren, und/oder basierend auf der maximalen Abweichung von mehreren Gruppen von Sensoren, und/oder basierend auf einer Anzahl von Abweichungen mehrerer Gruppen von Sensoren beurteilt wird.

Alternativ oder zusätzlich kann, was Aktuatoren angeht, völlig analog vorgesehen sein, dass für mehrere Gruppen mit jeweils wenigstens zwei Aktuatoren des cyber-physischen Systems jeweils ein Steuerdaten-Zusammenhangsparameter ermittelt wird, und der Steuerdaten-Zusammenhangsparameter jeder Gruppe jeweils mit der Steuerdaten-Zusammenhangs-Referenz verglichen wird, wobei jeweils die Abweichung von der Steuerdaten-Zusammenhangs-Referenz bestimmt wird. Die Integrität des zu überwachenden cyber-physischen Systems wird dann bevorzugt basierend auf dem arithmetischen und/oder geometrischen Mittelwert der Abweichungen mehrerer Gruppen von Aktuatoren, und/oder basierend auf der maximalen Abweichung von mehreren Gruppen von Aktuatoren, und/oder basierend auf einer Anzahl von Abweichungen mehrerer Gruppen von Aktuatoren beurteilt.

Das erfindungsgemäße Integritätsüberwachungs-System kann in Weiterbildung entsprechend dazu ausgebildet und/oder eingerichtet sein, für mehrere Gruppen mit jeweils wenigstens zwei Sensoren des cyber-physischen Systems jeweils einen Messdaten-Zusammenhangsparameter zu ermitteln, und den Messdaten-Zusammenhangsparameter jeder Gruppe jeweils mit der Messdaten-Zusammenhangs-Referenz zu vergleichen, wobei jeweils die Abweichung von der Messdaten-Zusammenhangs-Referenz bestimmt wird. Dann ist es bevorzugt weiterhin ausgebildet und/oder eingerichtet, um den arithmetischen und/oder geometrischen Mittelwert der Abweichungen mehrerer Gruppen von Sensoren, und/oder die maximale Abweichung von mehreren Gruppen von Sensoren, und/oder die Anzahl von Abweichungen mehrerer Gruppen von Sensoren zu bestimmen.

Alternativ oder zusätzlich kann es dazu ausgebildet und/oder eingerichtet sein, für mehrere Gruppen mit jeweils wenigstens zwei Aktuatoren des cyber-physischen Systems jeweils einen Steuerdaten-Zusammenhangsparameter zu ermitteln, und den Steuerdaten-Zusammenhangsparameter jeder Gruppe jeweils mit der Steuerdaten-Zusammenhangs-Referenz zu vergleichen, und bevorzugt den arithmetischen und/oder geometrischen Mittelwert der Abweichungen mehrerer Gruppen von Aktuatoren, und/oder die maximale Abweichung von mehreren Gruppen von Aktuatoren, und/oder die Anzahl von Abweichungen mehrerer Gruppen von Aktuatoren zu bestimmen.

Ist das erfindungsgemäße Integritätsüberwachungs-System derart ausgebildet und/oder eingerichtet, dass mehrere Gruppen von Sensoren und/oder mehrere Gruppen von Aktuatoren betrachtet werden können, und, um den Mittelwert und/oder die maximale Abweichung und/oder Anzahl von Abweichungen zu ermitteln, ist es bevorzugt weiterhin ausgebildet und/oder eingerichtet, die Integrität des zu überwachenden cyber-physischen Systems basierend auf einer oder mehreren dieser Größen zu beurteilen, etwa von einer Manipulation auszugehen, wenn ein Mittelwert bzw. eine maximale Abweichung bzw. eine Anzahl von Abweichungen oberhalb eines zulässigen (Referenz-)Wertes liegt.

Wird nicht nur eine Gruppe von Sensoren betrachtet, sondern zwei oder mehr Gruppen, kann u.a. eine besonders zuverlässige Beurteilung der Integrität erzielt werden, da über eine höhere Anzahl von Daten verlässlichere Ergebnisse erhalten werden. So können beispielsweise Ausreißer herausgemittelt werden bzw. kann eine Manipulation beispielsweise erst dann angenommen werden, wenn sich die Zusammenhangsparameter, also quasi der Fingerabdruck für mehrere Paare bzw. Gruppen mit mehr als zwei Sensoren/Aktuatoren etwa um ein bestimmtes Maß verändert hat.

Es kann auch eine oder können auch mehrere Gruppen betrachtet werden, die jeweils wenigstens einen Sensor und wenigstens einen Aktuator umfassen, also "gemischte" Gruppen. Für eine bzw. mehrere solcher Gruppen wird dann zweckmäßiger Weise (jeweils) wenigstens ein Mess-Steuerdaten-Zusammenhangsparameter ermittelt. Das erfindungsgemäße System kann entsprechend ausgebildet und/oder eingerichtet sein.

Eine Referenz, mit der der wenigstens eine Messdaten-Zusammenhangsparameter verglichen wird, kann verschieden ausgestaltet bzw. auf verschiedene Weise erhalten werden bzw. worden sein. Gleiches gilt für eine Referenz für den bzw. die Steuerdaten-Zusammenhangsparameter sowie gegebenenfalls für eine Mess-Steuerdaten-Referenz, wenn der Zusammenhang zwischen Mess- und Steuerdaten betrachtet wird.

Die Messdaten-Zusammenhangs-Referenz kann beispielsweise in Form wenigstens eines Referenz-Messdaten-Zusammenhangsparameters bzw. -wertes gegeben sein oder einen solchen umfassen. Analog kann die wenigstens eine Steuerdaten-Zusammenhangs-Referenz beispielsweise in Form wenigstens eines Referenz-Steuerdaten-Zusammenhangsparameters bzw. -wertes gegeben sein oder einen solchen umfassen. Es kann sich um einen Zusammenhangsparameter handeln, der zuvor, insbesondere während eines als manipulationsfrei angenommenen Betriebszustandes des cyber-physischen Systems ermittelt bzw. angelernt wurde. Gleiches gilt für eine gegebenenfalls herangezogene Mess-Steuerdaten-Referenz.

So kann beispielsweise vorgesehen sein, dass die Messdaten-Zusammenhangs-Referenz ermittelt wurde, indem in dem cyber-physischen System und/oder einem baugleichen oder ähnlichen cyber-physischen System in einem manipulationsfreien Zustand und bevorzugt unter typischen Bedingungen Messdaten mit mehreren Sensoren erfasst und/oder abgegriffen wurden, und für die von den verschiedenen Sensoren stammenden Messdaten wenigstens ein Messdaten-Zusammenhangsparameter als die Messdaten-Zusammenhangs-Referenz ermittelt wurde. In analoger Weise kann vorgesehen sein, dass die Steuerdaten-Zusammenhangs-Referenz ermittelt wurde, indem in dem cyber-physischen System und/oder einem baugleichen oder ähnlichen cyber-physischen System in einem manipulationsfreien Zustand und bevorzugt unter typischen Bedingungen für verschiedene Aktuatoren bestimmte Steuerdaten bereitgestellt und/oder abgegriffen wurden, und für die für die verschiedenen Aktuatoren bestimmten Steuerdaten wenigstens ein Steuerdaten-Zusammenhangsparameter als die Steuerdaten-Zusammenhangs-Referenz ermittelt wurde. Gleiches gilt für eine gegebenenfalls herangezogene Mess-Steuerdaten-Referenz.

Das Anlernen der Referenzinformation kann in bevorzugter Ausgestaltung während der Inbetriebnahme und/oder während eines Service-Modus eines zu überwachenden cyber-physischen Systems erfolgen. Dies hat den Vorteil, dass die erfindungsgemäße Überwachung besonders einfach verwendet werden kann.

Ein Anlernen kann dabei nicht nur in einem realen cyber-physischen System erfolgen, sondern alternativ oder zusätzlich auch in einer Simulation eines solchen. Eine weitere Ausführungsform zeichnet sich daher dadurch aus, dass die Messdaten-Zusammenhangs-Referenz unter Rückgriff auf eine Simulation des cyber-physischen Systems ermittelt wird oder wurde, und/oder die Steuerdaten-Zusammenhangs-Referenz unter Rückgriff auf eine Simulation des cyber-physischen Systems ermittelt wird oder wurde.

Auch ist es möglich, dass auf die erfindungsgemäße Weise bestimmte Zusammenhangsparmeter mehrerer, insbesondere baugleicher bzw. ähnlicher cyber-physischer Systeme, beispielsweise baugleicher oder ähnlicher Maschinen, Fertigungszellen oder Werken, miteinander verglichen werden. In einem solchen Falle stellt dann insbesondere der oder stellen die Zusammenhangsparameter einer von jeweils zwei cyber-physischen Systemen die Referenz dar.

Die wenigstens eine Messdaten-Zusammenhangs-Referenz und/oder die wenigstens eine Steuerdaten-Zusammenhangs-Referenz und gegebenenfalls die wenigstens eine Mess-Steuerdaten-Referenz sind bevorzugt Teil eines (übergeordneten) Fingerabdrucks, der auch als CPS-Referenz-Fingerabdruck bezeichnet werden kann. Besonders bevorzugt umfasst ein solcher Fingerabdruck mehrere Messdaten- und/oder Steuerdaten-Zusammenhangs-Referenzen, die dann insbesondere jeweils mit bevorzugt im laufenden Betrieb ermittelten verschiedenen Zusammenhangsparemetern verschiedener Gruppen von jeweils zwei oder mehr Sensoren bzw. Aktuatoren verglichen werden können, wodurch eine besonders zuverlässige Integritätsüberwachung erzielt werden kann.

Eine weitere vorteilhafte Ausgestaltung der Erfindung zeichnet sich dadurch aus, dass die erfindungsgemäße Überprüfung/ Überwachung durch Ermittlung des wenigstens einen Zusammenhangsparameters und Vergleich dieses mit einer Referenz in Kombination mit wenigstens einem konventionellen Angriffserkennungstool erfolgt. So kann beispielsweise zusätzlich eine konventionelle Host-Based Intrusion Detection (HID) und/oder eine konventionelle Network-Based Intrusion Detection (NID) erfolgen. Hierfür kann dann ein Host-Based Intrusion Detection System (HIDS) und/oder ein Network-Based Intrusion Detection System (NIDS) vorgesehen sein.

Ein weiterer Gegenstand der Erfindung ist ein Computerprogramm, das Programmcodemittel zur Durchführung der Schritte des erfindungsgemäßen Verfahrens umfasst.

Schließlich ist Gegenstand der Erfindung ein computerlesbares Medium, das Instruktionen umfasst, die, wenn sie auf wenigstens einem Computer ausgeführt werden, den wenigstens einen Computer veranlassen, die Schritte des erfindungsgemäßen Verfahrens durchzuführen.

Bei dem computerlesbaren Medium kann es sich beispielsweise um eine CD-ROM oder DVD oder einen USB oder Flash Speicher handeln. Es sei angemerkt, dass unter einem computerlesbaren Medium nicht ausschließlich ein körperliches Medium zu verstehen sein soll, sondern ein solches beispielswiese auch in Form eines Datenstromes und/oder eines Signals, welches einen Datenstrom repräsentiert, vorliegen kann.

Weitere Merkmale und Vorteile der vorliegenden Erfindung werden anhand der nachfolgenden Beschreibung erfindungsgemäßer Ausführungsformen unter Bezugnahme auf die beiliegende Zeichnung deutlich. Darin zeigt jeweils in rein schematischer Darstellung
- FIG 1: Komponenten eines cyber-physischen Systems und drei erfindungsgemäße Integritätsüberwachungs-Systeme; und
- FIG 2: ein Flussdiagramm eines erfindungsgemäßen Verfahrens zur Überwachung der Integrität eines cyber-physischen Systems.

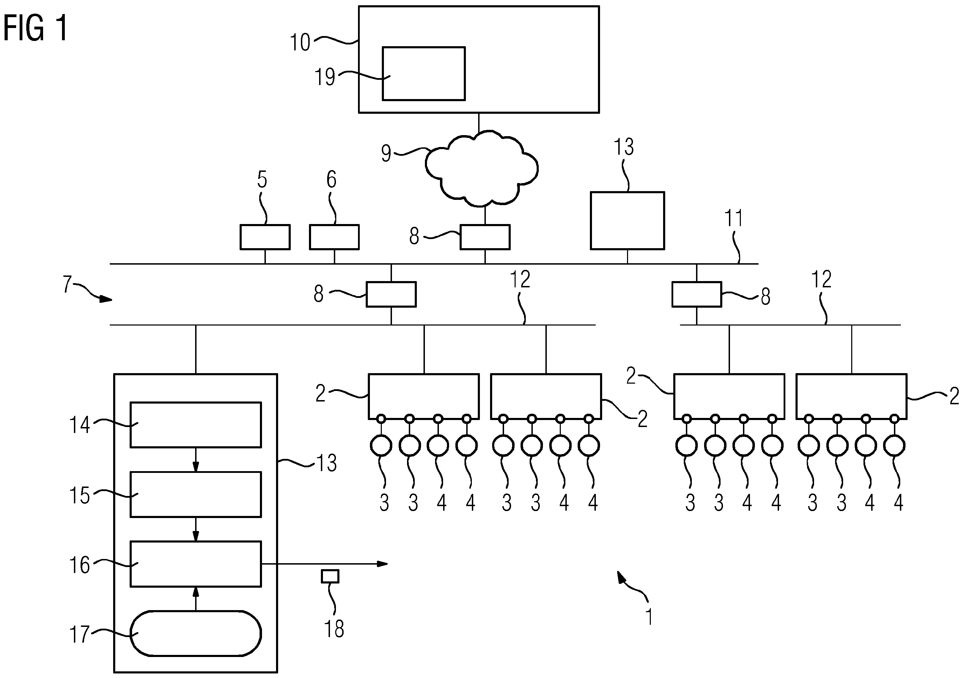

Die FIG 1 zeigt in rein schematischer Darstellung einige Komponenten eines cyber-physischen Systems, welches vorliegend durch ein industrielles Automatisierungssystem 1 gegeben ist.

Von dem Automatisierungssystem 1 sind konkret gezeigt vier Automatisierungskomponenten 2, die jeweils mit zwei Sensoren 3 und zwei Aktuatoren 4 verbunden sind. Weiterhin dargestellt sind ein SCADA-System 5 und ein Log-Server 6. Diese Komponenten 2-6 bilden allesamt in an sich bekannter Weise Teilnehmer eines Netzwerkes 7 des Automatisierungssystems 1, das über ein IoT-Gateway 8 mit einem Netzwerk 9, z.B. dem Internet, verbunden ist. Die Abkürzung IoT steht dabei in hinlänglich vorbekannter Weise für "Internet of Things", in das Deutsche übersetzt das "Internet der Dinge". Ebenfalls dargestellt ist ein IoT-Backend 10.

Das Automatisierungsnetzwerk 7 weist mehrere hierarchische Ebenen auf, konkret eine in Form eines Anlagennetz 11 gegebene obere Ebene und zwei Steuernetze 12, die jeweils über ein Gateway 8 mit dem Anlagennetz 11 verbunden sind. Wie man erkennt, liegen von den vier Automatisierungskomponenten 2 jeweils zwei auf der unteren Ebene, konkret in einem der Steuernetze 12, während das SCADA-System 5 und der Log-Server 6 in der oberen Ebene, also im Anlagennetz 11 liegen.

Die nur beispielshaft dargestellten Komponenten befinden sich zusammen mit einer Vielzahl weiterer Komponenten des Automatisierungssystem beispielsweise in einer Halle. Das Automatisierungssystem 1 kommt bei dem hier beschriebenen Ausführungsbeispiel zur Herstellung von Produkten zum Einsatz, wobei auch dies rein beispielhaft zu verstehen ist.

In der FIG 1 weiterhin zu erkennen sind zwei Ausführungsbeispiele erfindungsgemäßer Integritäts-Überwachungssysteme 13, von denen eines in dem in FIG 1 linken Steuernetz 12 liegt bzw. an dieses angeschlossen ist, und das andere in dem Anlagennetz 11. Jedes der beiden Systeme 13 weist eine Netzwerkschnittstelle zur Verbindung mit dem Netzwerk 7 auf.

Jedes der beiden Systeme 13 umfasst ferner eine Datenerfassungseinheit 14, die ausgebildet und/oder eingerichtet ist, um Sensordaten, die mit den Sensoren 3 der vier Automatisierungskomponenten 2 erfasst wurden, und/oder Steuerdaten, die für die Aktuatoren 4 der Automatisierungskomponenten 2 bestimmt sind, im laufenden Betrieb wiederholt abzugreifen. Konkret wird der Datenverkehr im Netzwerk 7, über das die Sensor- und Aktuatordaten u.a. zwischen dem SCADA-System 5 und den Automatisierungskomponenten 2 ausgetauscht werden, "mitgehört" und auf diese Weise die Sensor- und die Aktuatordaten wiederholt erhalten. Alternativ können die Daten von einer oder von mehreren Automatisierungskomponenten 2 und/oder einem SCADA-System 5 oder einem Log-Server 6 abgefragt oder von diesen bereitgestellt werden. Insbesondere können die Daten Teil eines Prozessabbildes der Eingänge und/oder Ausgänge der Automatisierungskomponenten 2 oder des SCADA-Systems 5 sein.

Dabei kann das Integritäts-Überwachungssystem 13, welches in dem Steuernetz 12 liegt, die Daten von den bzw. für die Sensoren 3 bzw. Aktuatoren 4 der beiden in dem Steuernetz 12 liegenden Automatisierungskomponenten 2 mithören.

Das weitere, in dem Anlagennetz 11 liegende Integritäts-Überwachungssystem 13 hingegen kommt an die Daten der Sensoren/Aktuatoren 3, 4 aller vier Automatisierungskomponenten 2. Insbesondere dieses System 13 kann auch Daten von dem SCADA-System 5 und/oder dem Log-Server 6 (oder auch einem Historian-Server) auslesen und prüfen.

Dabei ist die Datenerfassungseinheit 14 dazu ausgebildet und/oder eingerichtet, Messdatensequenzen, die mit den verschiedenen Sensoren 3 erfasst wurden, wobei jede Messdatensequenz Messdaten, die mit einem der Sensoren 3 zu zeitlich aufeinanderfolgenden Messzeitpunkten erfasst wurden, umfasst, zu erfassen und/oder übergeben zu bekommen, sowie Steuerdatensequenzen, die für die verschiedenen Aktuatoren 4 bestimmt sind, wobei jede Steuerdatensequenz Steuerdaten, die einem der Aktuatoren 4 zu zeitlich aufeinanderfolgenden Steuerzeitpunkten bereitgestellt wurden, umfasst, zu erfassen und/oder übergeben zu bekommen.

Die Erfassung bzw. das Abgreifen der Sequenzen erfolgt beispielsweise alle paar Sekunden oder Millisekunden oder alle 10 oder 100 Mikrosekunden, jeweils von Daten aus einem davorliegenden Zeitfenster. Das Zeitfenster kann beispielsweise eine Länge von 60 Sekunden, 1 Sekunde, 100, 10 oder 1 Millisekunde umfassen. Es kann zeitsynchronisiert erfolgen, d.h. dass das Abgreifen zu mit einer Zeitquelle synchronisierten Zeitpunkten erfolgt. Die Zeitsynchronisation kann z.B. mittels eines Protokolls wie PTP oder NTP, über ein Satellitennavigationssystem (GPS, Galileo, Beidou, Glonass) oder einen Zeitzeichensender wie DCF77 erfolgen. Ebenso ist es möglich, dass die Zeitfenster zeitsynchronisiert zu einem Fertigungsschritt und/oder einem Fertigungsauftrag gebildet werden.

Vorliegend werden die Sensor- und/oder Steuerdaten rückwirkungsfrei abgegriffen, z.B. unter Nutzung wenigstens einer Datendiode oder wenigstens einer sogenannten Data Capturing Unit (DCU). Dies hat den Vorteil, dass das Automatisierungssystem durch die erfindungsgemäßen Integritätsüberwachungs-Systeme 13 nicht beeinflusst werden kann.

Die beiden Integritäts-Überwachungssysteme 13 umfassen darüber hinaus jeweils eine Zusammenhangs-Ermittlungs-Einheit 15, die dazu ausgebildet und/oder eingerichtet ist, Messdaten-Zusammenhangsparameter zwischen den mit den verschiedenen Sensoren 3 erfassten Messdaten, vorliegend Messdatensequenzen, und Steuerdaten-Zusammenhangsparameter zwischen den für die verschiedenen Aktuatoren 4 bestimmten Steuerdaten, vorliegend Steuerdatensequenzen, im laufenden Betrieb wiederholt zu ermitteln.

Vorliegend werden als Zusammenhangsparameter Korrelationskoeffizienten, insbesondere Kreuz-Korrelationskoeffizienten und/oder Pearson-Korrelationskoeffizienten, berechnet, jeweils im Anschluss an die (wiederhole) Erfassung der Datensequenzen. Dabei ist die Zusammenhangs-Ermittlungs-Einheit 15 jeweils ausgebildet und/oder eingerichtet, um für insgesamt vier Gruppen mit jeweils zwei Sensoren 3 und für vier Gruppen mit jeweils zwei Aktuatoren 4 jeweils einen Messdaten- bzw. einen Steuerdaten-Zusammenhangsparameter in Form eines Korrelationskoeffizienten für eine Datensequenz zu berechnen. Es sei angemerkt, dass alternativ oder zusätzlich zu einer Berechnung der Zusammenhangsparameter auch eine Schätzung dieser vorgesehen sein kann. Auch können mehrere Zusammenhangsparameter gebildet werden und die Mehrzahl von Zusammenhangsparametern kann geprüft werden. Die Gruppen sind jeweils durch die beiden Sensoren 3 bzw. die beiden Aktuatoren 4, die an einer der Automatisierungskomponenten 2 anliegen, gebildet. Alternativ oder zusätzlich können auch Zusammenhangsparemeter jeweils für die Sensoren 3 bzw. Aktuatoren 4 verschiedener Automatisierungskomponenten 2 ermittelt werden.

Jedes der beiden Systeme 13 weist darüber hinaus eine Vergleichseinheit 16 auf, die dazu ausgebildet und/oder eingerichtet ist, die von der Zusammenhangs-Ermittlungs-Einheit 15 bestimmten Zusammenhangsparameter jeweils mit einer Messdaten-Zusammenhangs-Referenz bzw. einer Steuerdaten-Zusammenhangs-Referenz zu vergleichen. Konkret ist in jedem der beiden Integritäts-Überwachungssysteme 13 ein CPS-Referenz-Fingerabdruck 17 gespeichert, der die Messdaten-Zusammenhangs-Referenz für die Messdaten-Zusammenhangsparameter und/oder die Steuerdaten-Zusammenhangs-Referenz für die Steuerdaten-Zusammenhangsparameter umfasst. Ein CPS-Fingerabdruck kann sich dabei beispielsweise auf eine einzelne Maschine, eine einzelne Maschinenkomponente, z.B. ein Antrieb, auf eine Fertigungszelle, auf ein verteiltes Automatisierungssystem oder auf einen Verbund von Autoamtisierungssystemen, z.B. mehrere Fertigungsstandorte, beziehen. Die Referenzdaten können fest sein. Alternativ können die Referenzdaten abhängig von einem Fertigungsschritt oder Fertigungsauftrag aus einer Mehrzahl von Referenzdaten ausgewählt werden (nicht dargestellt). Die Vergleichseinheit 16 des in dem Anlagennetz 11 liegenden Systems 13 ist bei dem hier beschriebenen Ausführungsbeispiel dazu ausgebildet und/oder eingerichtet, den arithmetischen und/oder geometrischen Mittelwert der Abweichungen der vier Gruppen von Sensoren 3, und/oder die maximale Abweichung der vier Gruppen von Sensoren 3, und/oder die Anzahl von Abweichungen der vier Gruppen von Sensoren 3 von dem Messdaten-Referenz-Zusammenhangsparameter des Referenz-Fingerabdrucks 17 zu ermitteln, sowie den arithmetischen und/oder geometrischen Mittelwert der Abweichungen der vier Gruppen von Aktuatoren 4, und/oder die maximale Abweichung der vier Gruppen von Aktuatoren 4, und/oder die Anzahl von Abweichungen der vier Gruppen von Aktuatoren 4 von dem Steuerdaten-Referenz-Zusammenhangsparameter des Referenz-Fingerabdrucks 17 zu ermitteln. Das in dem Steuernetzwerk 12 liegende System 13 analog nur für die zwei Gruppen von Sensoren 3 bzw. Aktuatoren 4 der beiden Automatisierungskomponenten 2 in diesem Netz 12.

Die Einheiten 14, 15, 16 stellen funktionale Einheiten dar, die beispielsweise durch verschiedene Software-Komponenten auf einer gemeinsamen Hardware implementiert sein können. Weiterhin können die einzelnen Einheiten auch durch Hardware-Implementierungen realisiert werden, z.B. auf einem FPGA, DSP, ASIC. Sie können dabei diskret, also auf unterschiedlichen Bausteinen, oder gemeinsam auf einem Baustein, entweder in Software oder Hardware implementiert werden. Die Hardware der Systeme 13 kann beispielsweise in Form eines (Industrie)PCs gegeben sein. Dabei kann es sich sowohl um einen extra für diesen Zweck bereitgestellten PC handeln als auch um einen solchen, der neben der erfindungsgemäßen Überwachung weiteren Funktionen dient.

Es sei angemerkt, dass die Einheiten 14, 15, 16 und der CPS-Referenz-Fingerabdruck 17 beispielhaft nur bei dem in dem Steuernetzwerk 12 liegenden System 13 dargestellt sind, nicht jedoch bei dem System 13 in dem Anlagennetz 11, welches diese Einheiten ebenfalls umfasst.

Der in den Systemen 13 jeweils gespeicherte CPS-Referenz-Fingerabdruck 17 bzw. die einen Teil dieses bildenden Messdaten-Zusammenhangs-Referenz und Steuerdaten-Zusammenhangs-Referenz wurden erhalten, indem in dem Automatisierungssystem 1 und/oder einem baugleichen oder ähnlichen cyber-physischen System in einem manipulationsfreien Zustand und bevorzugt unter typischen Bedingungen Messdaten mit (den) mehreren Sensoren 3 abgegriffen wurden, und für die von den verschiedenen Sensoren 3 stammenden Messdaten wenigstens ein Messdaten-Zusammenhangsparameter als die Messdaten-Zusammenhangs-Referenz ermittelt wurde, und für die für die verschiedenen Aktuatoren 4 bestimmten Steuerdaten wenigstens ein Steuerdaten-Zusammenhangsparameter als die Steuerdaten-Zusammenhangs-Referenz ermittelt wurde.

Es sei angemerkt, dass es möglich ist, dass der CPS-Referenz-Fingerabdruck 17 alternativ oder zusätzlich unter Rückgriff auf eine Simulation des Automatisierungssystems 1 ermittelt wurde.

Weiterhin sei angemerkt, dass es auch möglich ist, dass auf die erfindungsgemäße Weise bestimmte Zusammenhangsparmeter mehrerer, insbesondere baugleicher bzw. ähnlicher cyber-physischer Systeme, beispielsweise baugleicher oder ähnlicher Maschinen, Fertigungszellen oder Werke, miteinander verglichen werden. In einem solchen Falle stellt dann insbesondere der oder stellen die Zusammenhangsparameter einer von jeweils zwei cyber-physischen Systemen die Referenz dar.

Die Integritäts-Überwachungssysteme 13 sind ferner jeweils dazu ausgebildet, und/oder eingerichtet, für den Fall, dass der Vergleich ergibt, dass eine Abweichung eines oder mehrerer Zusammenhangs-Parameter von der jeweiligen Referenz um mehr als einen zulässigen Wert vorliegt, davon auszugehen, dass sich das Automatisierungssystem 1 in einem manipulierten Zustand befindet und einen Alarm 18 auszugeben und/oder das Automatisierungssystem 1 in einen sicheren Zustand zu überführen. Die Ausgabe eines Alarms 18 ist in der FIG 1 beispielhaft nur für das an das Steuernetz 12 angeschlossene der beiden Integritäts-Überwachungssysteme 13 rein schematisch dargestellt.

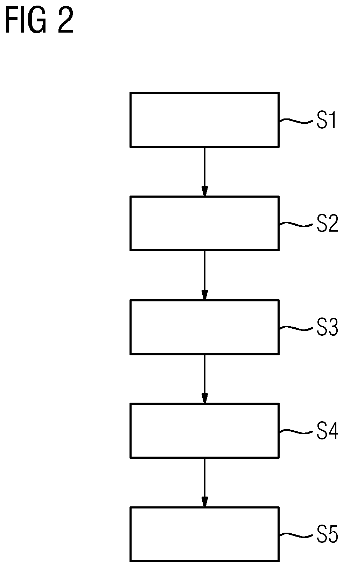

Unter Verwendung der erfindungsgemäßen Integritäts-Überwachungssysteme 13 wird im laufenden Betrieb des Automatisierungssystems 1 ein Ausführungsbeispiel des erfindungsgemäßen Verfahrens zur Überwachung durchgeführt, dessen Schritte (einer Iteration) dem Flussdiagramm gemäß FIG 2 entnommen werden können.

In einem ersten Schritt S1 werden (jeweils) von der Datenerfassungseinheit 14 die Messdatensequenzen, die mit den verschiedenen Sensoren 3 des Automatisierungssystems 1 erfasst wurden, und die Steuerdatensequenzen, die für die verschiedene Aktuatoren 4 des Automatisierungssystems 1 bestimmt sind, abgegriffen.

In einem Schritt S2 wird für die acht Gruppen mit jeweils zwei Sensoren 3 bzw. Aktuatoren 4 jeweils ein Messdaten- bzw. Steuerdaten-Zusammenhangsparameter berechnet, vorliegend in Form eines Korrelationskoeffizient.

Die erhaltenen acht Zusammenhangsparameter werden jeweils mit dem entsprechenden Teil des CPS-Referenz-Fingerabdruckes 17, konkret dem Messdaten-Referenz-Zusammenhangsparameter bzw. dem Steuerdaten-Referenz-Zusammenhangsparameter, die der Fingerabdruck 17 umfasst, verglichen (Schritt S3).

Basierend auf dem Vergleich wird die Integrität des zu überwachenden Automatisierungssystems 1 beurteilt (Schritt S4). Konkret werden der arithmetischen und/oder geometrischen Mittelwert und/oder die maximalen Abweichungen und/oder die Anzahl von Abweichungen für die vier Gruppen von Sensoren 3 sowie für die vier Gruppen von Aktuatoren 4 bestimmt.

Liegt hinsichtlich eines oder mehrere dieser Größen eine Abweichung um mehr als einen zulässigen Wert vor, wird ein Alarm 18 ausgegeben und das überwachte System 1 bevorzugt in einen sicheren Zustand überführt (Schritt S5).

Bei einem Alarm 18 kann es sich um einen akustischen Alarm insbesondere für Benutzer oder Betreiber vor Ort handeln. Auch ist es möglich, eine Alarm-SMS und/oder Alarm-E-Mail an einen Benutzer bzw. Betreiber zu senden.

Alternativ oder zusätzlich kann ein Alarmsignal an eine Safety-Steuerung ausgegeben werden, die das Automatisierungssystem 1 in einen eigensicheren Zustand (Nothalt) überführt. Es ist auch möglich, ein Alarmsignal einer Stromversorgung bereitzustellen, so dass mit hoher Zuverlässigkeit und unabhängig beispielsweise von einem Safety-System ein Maschinenhalt erzwungen werden kann.

Es kann sein, dass für den Fall, dass ein manipulierter Zustand erkannt wird, die Konfiguration des überwachten cyber-physischen Systems 1 geändert wird, beispielsweise derart, dass wenigstens eine Komponente dieses, die als manipuliert gilt, deaktiviert wird. Beispielsweise können dann diejenigen Sensoren 3 und/oder Aktuatoren 4 deaktiviert werden, die nicht (mehr) plausibel sind. Insbesondere, wenn unterschiedliche technische Realisierungen von Komponenten, etwa Sensoren 3 und/oder Aktuatoren 4 (z.B. unterschiedliche Betriebssysteme, unterschiedliche Bibliotheken, unterschiedliche Hardware-Basis, etc.) verwendet werden, kann dadurch die Angriffshürde, um ein cyber-physisches System, beispielsweise Automatisierungssystem 1 erfolgreich zu manipulieren, weiter erhöht werden.

Ergibt hingegen der Vergleich gemäß Schritt S4, dass keine (unzulässig hohen) Abweichungen vorliegen, werden in einer nächsten Iteration, ggf. nach Ablauf einer vorgegebenen Wartezeit, die Schritte S1 bis S4 erneut durchgeführt.

Es sei angemerkt, dass alternativ oder zusätzlich dazu, dass das erfindungsgemäße Verfahren unter Verwendung (wenigstens) eines erfindungsgemäßen Integritätsüberwachungs-Systems 13 durchgeführt wird, das mit allen seinen Einheiten 14, 15, 16 vor Ort (lokal) bei einem zu überwachenden Automatisierungssystem 1 angesiedelt ist, dieses bzw. zumindest einige Schritte dieses auch als Dienst in einer Cloud (z.B. erreichbar über das Netzwerk bzw. Internet 9) angeboten werden kann. Dies ist - rein schematisch - ebenfalls in der FIG 1 angedeutet, konkret durch ein in dem IoT-Backend 10 dargestelltes Blockelement 19, welches die Durchführung der Schritte S1 bis S4 als Dienst in der Cloud repräsentiert und auch als CPS-Fingerabdruck-Überprüfungs-Dienst interpretiert bzw. bezeichnet werden kann, bzw. das ein Ausführungsbeispiel eines virtuellen erfindungsgemäßen Integritätsüberwachungs-Systems 19 darstellt.

In allen Varianten lässt sich die erfindungsgemäße Überwachung mit geringem Aufwand durchführen, insbesondere unter Nutzung von Daten bzw. Werten, die ohnehin in einem zu überwachenden cyber-physischen System 1 vorhanden sind, nämlich unter Nutzung der physikalischen Sensor und/oder Aktuatordaten bzw. -werte. Trotz des geringen Aufwandes kann eine sehr zuverlässige Integritätsüberwachung erzielt werden.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Verfahren zur Überwachung der Integrität eines insbesondere industriellen cyber-physischen Systems (1), bei dem
- Messdaten, die mit verschiedenen Sensoren (3) des cyber-physischen Systems (1) erfasst wurden, und/oder Steuerdaten, die für verschiedene Aktuatoren (4) des cyber-physischen Systems (1) bestimmt sind, bereitgestellt und/oder abgegriffen werden (S1),
- wenigstens ein Messdaten-Zusammenhangsparameter zwischen den mit den verschiedenen Sensoren (3) erfassten Messdaten ermittelt wird, und/oder wenigstens ein Steuerdaten-Zusammenhangsparameter zwischen den für die verschiedenen Aktuatoren (4) bestimmten Steuerdaten ermittelt wird (S2),
- der wenigstens eine Messdaten-Zusammenhangsparameter mit einer Messdaten-Zusammenhangs-Referenz verglichen wird und/oder der wenigstens eine Steuerdaten-Zusammenhangsparameter mit einer Steuerdaten-Zusammenhangs-Referenz verglichen wird (S3), und
- basierend auf dem Vergleich die Integrität des zu überwachenden cyber-physischen Systems (1) beurteilt wird (S4).

2. Verfahren nach Anspruch 1, **dadurch gekennzeichnet, dass** Messdaten, die mit verschiedenen Sensoren (3) des cyber-physischen Systems (1) erfasst wurden, und Steuerdaten, die für verschiedene Aktuatoren (4) des cyber-physischen Systems (1) bestimmt sind, bereitgestellt und/oder abgegriffen werden, wenigstens ein Mess-Steuerdaten-Zusammenhangsparameter zwischen den mit den verschiedenen Sensoren (3) erfassten Messdaten und den für verschiedene Aktuatoren (4) bestimmten Steuerdaten ermittelt wird, und der wenigstens eine ermittelten Mess-Steuerdaten-Zusammenhangsparameter mit einer Mess-Steuerdaten-Referenz verglichen wird, und bevorzugt basierend auf dem Vergleich die Integrität des zu überwachenden cyber-physischen Systems (1) beurteilt wird.

3. Verfahren nach Anspruch 1 oder 2, **dadurch gekennzeichnet, dass** die Beurteilung der Integrität des zu überwachenden cyber-physischen Systems (1) die Beurteilung einschließt, ob sich zumindest ein Teil des cyber-physischen Systems (1) in einem manipulierten Zustand befindet, und für den Fall, dass ein manipulierter Zustand erkannt wird, bevorzugt ein Alarm (18) ausgegeben und/oder das cyber-physische System (1) in einen sicheren Zustand überführt wird (S5).

4. Verfahren nach einem der vorhergehenden Ansprüche, **dadurch gekennzeichnet, dass** wenigstens ein Korrelationskoeffizient, insbesondere wenigstens ein Kreuz-Korrelationskoeffizient und/oder wenigstens ein Pearson-Korrelationskoeffizient, und/oder wenigstens eine Korrelationsmatrix und/oder wenigstens eine Transinformation als der wenigstens eine Messdaten-Zusammenhangsparameter und/oder als der wenigstens eine Steuerdaten-Zusammenhangsparameter und gegebenenfalls als der wenigstens eine Mess-Steuerdaten-Zusammenhangsparameter ermittelt wird.

5. Verfahren nach einem der vorhergehenden Ansprüche, **dadurch gekennzeichnet, dass** der wenigstens eine Messdaten-Zusammenhangsparameter und/oder der wenigstens eine Steuerdaten-Zusammenhangsparameter und gegebenenfalls der wenigstens eine Mess-Steuerdaten-Zusammenhangsparameter im laufenden Betrieb des cyber-physischen Systems (1) ermittelt wird.

6. Verfahren nach einem der vorhergehenden Ansprüche, **dadurch gekennzeichnet, dass** der wenigstens eine Messdaten-Zusammenhangsparameter und/oder der wenigstens eine Steuerdaten-Zusammenhangsparameter und gegebenenfalls der wenigstens ein Mess-Steuerdaten-Zusammenhangsparameter wiederholt ermittelt wird.

7. Verfahren nach einem der vorhergehenden Ansprüche, **dadurch gekennzeichnet, dass** Messdatensequenzen, die mit verschiedenen Sensoren (3) des cyber-physischen Systems (1) erfasst wurden, wobei jede Messdatensequenz Messdaten, die mit einem der Sensoren (3) zu zeitlich aufeinanderfolgenden Messzeitpunkten erfasst wurden, umfasst, bereitgestellt und/oder abgegriffen werden, und wenigstens ein Zusammenhangsparameter zwischen den Messdatensequenzen der verschiedenen Sensoren (3) als der wenigstens eine Messdaten-Zusammenhangsparameter ermittelt wird, und/oder
Steuerdatensequenzen, die für verschiedene Aktuatoren (4) des cyber-physischen Systems (1) bestimmt sind, wobei jede Steuerdatensequenz Steuerdaten, die einem der Aktuatoren (4) zu zeitlich aufeinanderfolgenden Steuerzeitpunkten bereitgestellt wurden, umfasst, bereitgestellt und/oder abgegriffen werden, und wenigstens ein Zusammenhangsparameter zwischen den Steuerdatensequenzen der verschiedenen Aktuatoren (4) als der wenigstens eine Steuerdaten-Zusammenhangsparameter ermittelt wird.

8. Verfahren nach Anspruch 7, **dadurch gekennzeichnet, dass** die Messdatensequenzen als Teil einer Sequenz von Prozessabbildern wenigstens einer Steuerung des cyber-physischen Systems (1) bereitgestellt und/oder abgegriffen werden, und/oder dass die Steuerdatensequenzen als Teil einer Sequenz von Prozessabbildern wenigstens einer Steuerung des cyber-physischen Systems (1) bereitgestellt und/oder abgegriffen werden.

9. Verfahren nach einem der vorhergehenden Ansprüche, **dadurch gekennzeichnet, dass** für mehrere Gruppen mit jeweils wenigstens zwei Sensoren (3) des cyber-physischen Systems (1) jeweils ein Messdaten-Zusammenhangsparameter ermittelt wird, und der Messdaten-Zusammenhangsparameter jeder Gruppe jeweils mit der Messdaten-Zusammenhangs-Referenz verglichen wird, wobei jeweils die Abweichung von der Messdaten-Zusammenhangs-Referenz bestimmt wird, und die Integrität des zu überwachenden cyber-physischen Systems (1) bevorzugt basierend auf dem arithmetischen und/oder geometrischen Mittelwert der Abweichungen mehrerer Gruppen von Sensoren (3), und/oder basierend auf der maximalen Abweichung von mehreren Gruppen von Sensoren (3), und/oder basierend auf einer Anzahl von Abweichungen mehrerer Gruppen von Sensoren (3) beurteilt wird, und/oder für mehrere Gruppen mit jeweils wenigstens zwei Aktuatoren (4) des cyber-physischen Systems (1) jeweils ein Steuerdaten-Zusammenhangsparameter ermittelt wird, und der Steuerdaten-Zusammenhangsparameter jeder Gruppe jeweils mit der Steuerdaten-Zusammenhangs-Referenz verglichen wird, wobei jeweils die Abweichung von der Steuerdaten-Zusammenhangs-Referenz bestimmt wird, und die Integrität des zu überwachenden cyber-physischen Systems (1) bevorzugt basierend auf dem arithmetischen und/oder geometrischen Mittelwert der Abweichungen mehrerer Gruppen von Aktuatoren (4), und/oder basierend auf der maximalen Abweichung von mehreren Gruppen von Aktuatoren (4), und/oder basierend auf einer Anzahl von Abweichungen mehrerer Gruppen von Aktuatoren (4) beurteilt wird.

10. Verfahren nach einem der vorhergehenden Ansprüche, **dadurch gekennzeichnet, dass** die Messdaten-Zusammenhangs-Referenz ermittelt wird oder wurde, indem in dem cyber-physischen System (1) und/oder einem baugleichen oder ähnlichen cyber-physischen (1) System in einem manipulationsfreien Zustand und bevorzugt unter typischen Bedingungen Messdaten mit mehreren Sensoren (3) erfasst und/oder abgegriffen werden oder wurden, und zwischen den von den verschiedenen Sensoren (3) stammenden Messdaten wenigstens ein Messdaten-Zusammenhangsparameter als die Messdaten-Zusammenhangs-Referenz ermittelt wird oder wurde, und/oder
die Steuerdaten-Zusammenhangs-Referenz ermittelt wird oder wurde, indem in dem cyber-physischen System (1) und/oder einem baugleichen oder ähnlichen cyber-physischen System (1) in einem manipulationsfreien Zustand und bevorzugt unter typischen Bedingungen für verschiedene Aktuatoren (4) bestimmte Steuerdaten bereitgestellt und/oder abgegriffen werden oder wurden, und zwischen den für die verschiedenen Aktuatoren (4) bestimmten Steuerdaten wenigstens ein Steuerdaten-Zusammenhangsparameter als die Steuerdaten-Zusammenhangs-Referenz ermittelt werden oder wurde.

11. Verfahren nach einem der vorhergehenden Ansprüche, **dadurch gekennzeichnet, dass** die Messdaten-Zusammenhangs-Referenz unter Rückgriff auf eine Simulation des cyber-physischen Systems (1) ermittelt wird oder wurde, und/oder die Steuerdaten-Zusammenhangs-Referenz unter Rückgriff auf eine Simulation des cyber-physischen Systems (1) ermittelt wird oder wurde.

12. Integritätsüberwachungs-System (13) zur Durchführung des Verfahrens nach einem der vorhergehenden Ansprüche, das dazu ausgebildet und/oder eingerichtet ist,
- Messdaten, die mit verschiedenen Sensoren (3) eines zu überwachenden cyber-physischen Systems (1) erfasst wurden, und/oder Steuerdaten, die für verschiedene Aktuatoren (4) eines zu überwachenden cyber-physischen Systems (1) bestimmt sind, zu erfassen und/oder übergeben zu bekommen,
- wenigstens einen Messdaten-Zusammenhangsparameter zwischen den mit den verschiedenen Sensoren (3) erfassten Messdaten zu ermitteln, und/oder wenigstens einen Steuerdaten-Zusammenhangsparameter zwischen den für die verschiedenen Aktuatoren (4) bestimmten Steuerdaten zu ermitteln,
- den wenigstens einen Messdaten-Zusammenhangsparameter mit wenigstens einer Messdaten-Zusammenhangs-Referenz zu vergleichen und/oder den wenigstens einen Steuerdaten-Zusammenhangsparameter mit wenigstens einer Steuerdaten-Zusammenhangs-Referenz zu vergleichen.

13. Integritätsüberwachungs-System (13) nach Anspruch 12, **dadurch gekennzeichnet, dass** das Integritätsüberwachungs-System (13) dazu ausgebildet und/oder eingerichtet ist, Messdaten, die mit verschiedenen Sensoren (3) eines zu überwachenden cyber-physischen Systems (1) erfasst wurden, und Steuerdaten, die für verschiedene Aktuatoren (4) eines zu überwachenden cyber-physischen Systems (1) bestimmt sind, zu erfassen und/oder übergeben zu bekommen, und wenigstens einen Mess-Steuerdaten-Zusammenhangsparameter zwischen den mit den verschiedenen Sensoren (3) erfassten Messdaten und den für verschiedene Aktuatoren (4) bestimmten Steuerdaten zu ermitteln, und den wenigstens einen ermittelten Mess-Steuerdaten-Zusammenhangsparameter mit einer Mess-Steuerdaten-Referenz zu vergleichen, und bevorzugt basierend auf dem Vergleich die Integrität des zu überwachenden cyber-physischen Systems (1) zu beurteilen.

14. Integritätsüberwachungs-System (13) nach Anspruch 12 oder 13, **dadurch gekennzeichnet, dass** das Integritätsüberwachungs-System (13) dazu ausgebildet und/oder eingerichtet ist, wenigstens einen Korrelationskoeffizient, insbesondere wenigstens einen Kreuz-Korrelationskoeffizient und/oder wenigstens einen Pearson-Korrelationskoeffizient, und/oder wenigstens eine Korrelationsmatrix und/oder wenigstens eine Transinformation als den wenigstens einen Messdaten-Zusammenhangsparameter und/oder als den wenigstens einen Steuerdaten-Zusammenhangsparameter und gegebenenfalls den wenigstens einen Mess-Steuerdaten-Zusammenhangsparameter zu ermitteln.

15. Integritätsüberwachungs-System (13) nach einem der Ansprüche 12 bis 14, **dadurch gekennzeichnet, dass** das Integritätsüberwachungs-System (13) dazu ausgebildet und/oder eingerichtet ist, Messdatensequenzen, die mit verschiedenen Sensoren (3) des cyber-physischen Systems (1) erfasst wurden, wobei jede Messdatensequenz Messdaten, die mit einem der Sensoren (3) zu zeitlich aufeinanderfolgenden Messzeitpunkten erfasst wurden, umfasst, zu erfassen und/oder übergeben zu bekommen, und um wenigstens ein Zusammenhangsparameter zwischen den Messdatensequenzen der verschiedenen Sensoren (3) als den wenigstens einen Messdaten-Zusammenhangsparameter zu ermitteln, und/oder
Steuerdatensequenzen, die für verschiedene Aktuatoren (4) des cyber-physischen Systems bestimmt sind, wobei jede Steuerdatensequenz Steuerdaten, die einem der Aktuatoren (4) zu zeitlich aufeinanderfolgenden Steuerzeitpunkten bereitgestellt wurden, umfasst, zu erfassen und/oder übergeben zu bekommen, und um wenigstens einen Zusammenhangsparameter zwischen den Steuerdatensequenzen der verschiedenen Aktuatoren (4) als den wenigstens einen Steuerdaten-Zusammenhangsparameter zu ermitteln.

16. Integritätsüberwachungs-System (13) nach Anspruch 15, **dadurch gekennzeichnet, dass** das Integritätsüberwachungs-System (13) dazu ausgebildet und/oder eingerichtet ist, die Messdatensequenzen als Teil einer Sequenz von Prozessabbildern wenigstens einer Steuerung des cyber-physischen Systems (1) zu erfassen und/oder übergeben zu bekommen, und/oder die Steuerdatensequenzen als Teil einer Sequenz von Prozessabbildern wenigstens einer Steuerung des cyber-physischen Systems (1) zu erfassen und/oder übergeben zu bekommen.

17. Integritätsüberwachungs-System (13) nach einem der Ansprüche 12 bis 16, **dadurch gekennzeichnet, dass** das Integritätsüberwachungs-System (13) dazu ausgebildet und/oder eingerichtet ist, für mehrere Gruppen mit jeweils wenigstens zwei Sensoren (3) des cyber-physischen Systems (1) jeweils einen Messdaten-Zusammenhangsparameter zu ermitteln, und den Messdaten-Zusammenhangsparameter jeder Gruppe jeweils mit der Messdaten-Zusammenhangs-Referenz zu vergleichen, wobei jeweils die Abweichung von der Messdaten-Zusammenhangs-Referenz bestimmt wird, und bevorzugt den arithmetischen und/oder geometrischen Mittelwert der Abweichungen mehrerer Gruppen von Sensoren (3), und/oder die maximale Abweichung von mehreren Gruppen von Sensoren (3), und/oder die Anzahl von Abweichungen mehrerer Gruppen von Sensoren (3) zu bestimmen,
und/oder
für mehrere Gruppen mit jeweils wenigstens zwei Aktuatoren (4) des cyber-physischen Systems (1) jeweils einen Steuerdaten-Zusammenhangsparameter zu ermitteln, und den Steuerdaten-Zusammenhangsparameter jeder Gruppe jeweils mit der Steuerdaten-Zusammenhangs-Referenz zu vergleichen, und bevorzugt den arithmetischen und/oder geometrischen Mittelwert der Abweichungen mehrerer Gruppen von Aktuatoren (4), und/oder die maximale Abweichung von mehreren Gruppen von Aktuatoren (4), und/oder die Anzahl von Abweichungen mehrerer Gruppen von Aktuatoren (4) zu bestimmen.

18. Computerprogramm umfassend Programmcode-Mittel zur Durchführung des Verfahrens nach einem der Ansprüche 1 bis 11.

19. Computerlesbares Medium, das Instruktionen umfasst, die, wenn sie auf wenigstens einem Computer ausgeführt werden, den wenigstens einen Computer veranlassen, die Schritte des Verfahrens nach einem der Ansprüche 1 bis 11 durchzuführen.
